Europäisches Patentamt

European Patent Office

Office européen des brevets

(19)

(11) **EP 1 066 706 B1**

(12) **FASCICULE DE BREVET EUROPEEN**

(45) Date de publication et mention
de la délivrance du brevet:
**29.12.2004  Bulletin 2004/53**

(21) Numéro de dépôt: **99909064.0**

(22) Date de dépôt: **22.03.1999**

(51) Int Cl.⁷: **H04L 25/03**, H04B 1/707

(86) Numéro de dépôt international:
**PCT/FR1999/000661**

(87) Numéro de publication internationale:
**WO 1999/049632 (30.09.1999 Gazette 1999/39)**

(54) **PROCEDE D'EGALISATION NUMERIQUE, ET RECEPTEUR DE RADIOCOMMUNICATION METTANT EN OEUVRE UN TEL PROCEDE**

VERFAHREN ZUR DIGITALEN ENTZERRUNG UND EMPFÄNGER ZUR AUSFÜHRUNG DIESES VERFAHRENS

METHOD FOR DIGITAL EQUALISATION, AND RADIO COMMUNICATION RECEIVER IMPLEMENTING SAID METHOD

(84) Etats contractants désignés:
**DE ES FR GB IT**

(30) Priorité: **25.03.1998  FR 9803680**

(43) Date de publication de la demande:
**10.01.2001  Bulletin 2001/02**

(73) Titulaire: **NORTEL NETWORKS SA
78280 Guyancourt (FR)**

(72) Inventeurs:
 • **BEN RACHED, Nidham
  F-75017 Paris (FR)**
 • **BOUMENDIL, Sarah
  F-75015 Paris (FR)**

(74) Mandataire: **Loisel, Bertrand et al
Cabinet Plasseraud
65/67 rue de la Victoire
75440 Paris Cedex 09 (FR)**

(56) Documents cités:
  **EP-A- 0 793 359          DE-C- 19 616 829**

  • **SCHLEGEL C ET AL: "MULTIUSER PROJECTION RECEIVERS" IEEE JOURNAL ON SELECTED AREAS IN COMMUNICATIONS, vol. 14, no. 8, octobre 1996, pages 1610-1617, XP000635687**
  • **WERNER M: "MEHRSTUFIGES JOINT-DETECTION-VERFAHREN MIT ENTSCHEIDUNGSRUECKKOPPLUNG FUER CDMA MODILFUNKANWENDUNGEN" CODIERUNG FUR QUELLE, KANAL UND UBERTRAGUNG, VORTRAGE DER ITG-FACHTAGUNG, MUNCHEN, OCT. 26 -28, 1994, no. 130, 1 janvier 1994, pages 357-368, XP000503811 INFORMATIONSTECHNISCHE GESELLSCHAFT IM VDE (ITG)**
  • **MARTONE M: "BLIND TREE SEARCH OVER NON MINIMUM PHASE CHANNELS USING CUMULANTS" GLOBECOM '95. IEEE GLOBAL TELECOMMUNICATIONS CONFERENCE, SINGAPORE, NOV. 14 - 16, 1995, vol. 2, 14 novembre 1995, pages 855-859, XP000622915 INSTITUTE OF ELECTRICAL AND ELECTRONICS ENGINEERS**

## Description

La présente invention concerne l'égalisation numérique des signaux. Elle trouve une application importante dans le domaine des radiocommunications.

Le procédé s'applique lorsque le signal reçu résulte de la superposition de différents signaux, issus du même émetteur et/ou d'émetteurs différents, signaux pour lesquels les réponses des canaux de transmission entre émetteur et récepteur ont été préalablement déterminées. Un problème principal qui se pose alors est celui du compromis entre les performances de l'égaliseur et sa complexité. Une estimation complète, selon le maximum de vraisemblance, de tous les symboles des signaux superposés est théoriquement possible, par exemple en employant l'algorithme de Viterbi (voir G.D. Forney Jr.: "The Viterbi Algorithm", Proc. of the IEEE, Vol. 61, No.3, mars 1973, pages 268-278). Néanmoins, dès que la réponse impulsionnelle des canaux devient longue ou que le nombre de signaux superposés devient important, la complexité exponentielle de ces méthodes les rend impraticables.

Pour illustrer ce problème, on considère le cas des radiocommunications à spectre étalé faisant appel à un accès multiple à répartition par codes (CDMA).

On suppose que K canaux logiques synchrones, désignés ici par un indice k ($1 \leq k \leq K$), partagent le même canal physique, c'est-à-dire utilisent la même fréquence porteuse en même temps, et sont distingués par des séquences d'étalement $c^k$ qui leurs sont respectivement attribuées. Chaque canal sert à la transmission d'un signal respectif composé de séquences successives $d^k$, ou trames, de n symboles $d_p^k$ ($1 \leq p \leq n$). Les symboles $d_p^k$ sont à valeurs discrètes : binaires ($\pm 1$) dans le cas d'une modulation de type BPSK, quaternaires ($\pm 1 \pm j$) dans le cas d'une modulation de type QPSK...

On suppose encore que les séquences d'étalement $c^k$ ont une cadence Q fois supérieure à celle des symboles $d_p^k$, Q étant un facteur d'étalement entier (le cas limite Q=1 correspond à l'absence d'étalement), et une périodicité égale à la durée d'un symbole. Les échantillons à valeurs complexes (généralement $\pm 1$ ou $\pm 1 \pm j$) des séquences d'étalement $c^k$, ou "chips", sont notés $c_q^k$ ($1 \leq q \leq Q$) . Les séquences $c^k$ sont choisies orthogonales entre elles

$$\sum_{q=1}^{Q} c_q^k \cdot c_q^{k'} = 0$$

pour $k \neq k'$) afin de faciliter la distinction entre les canaux. Néanmoins les conditions de propagation, notamment les trajets multiples, ne conservent généralement pas cette orthogonalité, particulièrement dans le cas de séquences d'étalement courtes.

Après conversion en bande de base, numérisation et filtrage adapté, un vecteur Y du signal reçu reflétant les symboles émis sur la durée d'une trame a pour expression :

$$
Y = \begin{pmatrix} y_1 \\ y_2 \\ \vdots \\ y_p \\ \vdots \\ y_L \end{pmatrix} = \sum_{k=1}^{K} \begin{pmatrix} r_1^k & 0 & 0 & \cdots & & 0 \\ r_2^k & r_1^k & & & & \\ & r_2^k & & \ddots & & \vdots \\ \vdots & & \ddots & & 0 & 0 \\ \vdots & \vdots & \ddots & & r_1^k & 0 \\ r_W^k & & & & r_2^k & r_1^k \\ 0 & r_W^k & & & & r_2^k \\ 0 & 0 & & & & \vdots \\ \vdots & & \ddots & & \vdots & r_W^k \\ 0 & 0 & \cdots & 0 & r_W^k \end{pmatrix} \begin{pmatrix} c_1^k \cdot d_1^k \\ c_2^k \cdot d_1^k \\ \vdots \\ c_Q^k \cdot d_1^k \\ c_1^k \cdot d_2^k \\ \vdots \\ c_q^k \cdot d_p^k \\ \vdots \\ c_Q^k \cdot d_n^k \end{pmatrix} + Y_N \qquad (1)
$$

où W est la longueur, en nombre de chips, de la réponse impulsionnelle estimée des canaux, $r^k = (r_1^k, ..., r_w^k)$ est la réponse impulsionnelle estimée du k-ième canal, les $r_j^k$ étant des nombres complexes tels que $r_j^k = 0$ si $j \leq 0$ ou $j > W$, $y_p$ est le p-ième échantillon complexe reçu (à la fréquence chip) avec $1 \leq p \leq L = nQ + W - 1$, et $Y_N$ est un vecteur de taille L composé d'échantillons de bruit additif. La réponse impulsionnelle estimée $r^k$ tient compte du canal de propagation, de la mise en forme du signal par l'émetteur et du filtrage de réception.

On peut diminuer la taille du problème d'un facteur Q en intégrant les codes $c^k$ aux réponses $r^k$, c'est-à-dire en calculant les produits de convolution suivants pour $1 \leq j \leq L'=Q+W-1$ :

$$b_j^k = \sum_{q=1}^{Q} r_{j+1-q}^k \cdot c_q^k \qquad (2)$$

L'expression (1) devient alors :

$$Y = \sum_{k=1}^{K} \begin{pmatrix} b_1^k & 0 & \cdots & 0 \\ \vdots & \vdots & & \\ b_Q^k & 0 & & \\ b_{Q+1}^k & b_1^k & & \vdots \\ \vdots & \vdots & & \\ & b_Q^k & & \\ & b_{Q+1}^k & \ddots & 0 \\ b_{Q+W-1}^k & & & b_1^k \\ 0 & \vdots & & \vdots \\ & & & b_Q^k \\ & b_{Q+W-1}^k & & b_{Q+1}^k \\ \vdots & 0 & & \\ & & \ddots & \vdots \\ 0 & \cdots & 0 & b_{Q+W-1}^k \end{pmatrix} \begin{pmatrix} d_1^k \\ d_2^k \\ \vdots \\ d_n^k \end{pmatrix} + Y_N = \sum_{k=1}^{K} B^k \cdot D^k + Y_N \qquad (3)$$

Les matrices $B^k$ de taille $L \times n$ ont une structure de type Toeplitz le long d'une diagonale de pente Q (le long de la diagonale principale dans le cas où Q=1), c'est-à-dire que si $\beta_{i,j}^k$ désigne le terme situé à la i-ième ligne et à la j-ième colonne d'une matrice $B^k$, alors $\beta_{i+Q,j+1}^k = \beta_{i,j}^k$ pour $1 \leq i \leq L-Q$ et $1 \leq j \leq n-1$. Les termes de la matrice $B^k$ sont donnés par : $\beta_{1,j}^k = 0$ pour $1<j \leq n$ ($B^k$ n'a donc que des zéros au-dessus de sa diagonale principale, et même au-dessus de sa diagonale de pente Q) ; $\beta_{i,1}^k = 0$ pour $Q+W \leq i \leq L$ (structure de matrice-bande) ; et $\beta_{i,1}^k = b_i^k$ pour $1 \leq i \leq Q+W$.

Dans des égaliseurs simples, on cherche seulement à estimer la contribution d'un canal, les contributions des autres canaux étant assimilées à du bruit. En d'autres termes, le récepteur considère que K=1 après avoir déterminé la réponse $B^1$ pertinente. On peut alors traiter le système linéaire (3), qui se réduit à $Y=B^1D^1+Y_N$, selon une méthode, telle que l'algorithme de Viterbi, qui maximise la vraisemblance des estimations des symboles $D^1$, au moyen d'un égaliseur dont la complexité est raisonnable dès lors que la longueur W de la réponse des canaux n'est pas trop importante.

Si les contributions de plusieurs canaux sont à estimer, une possibilité consiste à utiliser plusieurs égaliseurs simples du type ci-dessus, fonctionnant en parallèle avec les réponses de canaux différents. Mais il est évidemment préférable de résoudre en une seule fois le système (3) avec K>1, en essayant de maximiser autant que possible la vraisemblance des estimations des symboles $d_p^k$. On parle alors d'égalisation conjointe.

On définit une matrice A de L=nQ+W-1 lignes et N=nQ colonnes, et un vecteur D de N composantes discrètes pour exprimer le vecteur Y sous la forme :

$$Y=AD+Y_N \qquad (4)$$

Une expression possible de la matrice et du vecteur D est la suivante :

$$A = \left( B^K \mid \cdots \mid B^2 \mid B^1 \right), \text{ et } D = \begin{pmatrix} D^K \\ \hline \vdots \\ \hline D^2 \\ \hline D^1 \end{pmatrix} \qquad (5)$$

Dans cette organisation de la matrice A et du vecteur D, les composantes sont rangées canal par canal.

On peut également organiser de la matrice A et le vecteur D du système linéaire (4) de façon à ranger les composantes symbole par symbole. La matrice A a alors une structure de type Toeplitz par blocs, avec un même bloc B de L'=Q+W-1 lignes et K colonnes répété n fois avec un décalage de Q lignes de zéros entre blocs B adjacents, et le vecteur D est divisé en blocs correspondants $D_i$ de taille K ($1 \le i \le n$), soit :

$$A = \begin{pmatrix} B & & 0 & \cdots & 0 \\ & \ddots & & & \vdots \\ 0 & & \ddots & & 0 \\ & & & B & \\ \vdots & & \ddots & & B \\ 0 & & \ddots & & 0 \end{pmatrix}, \text{ et } D = \begin{pmatrix} D_n \\ \hline \vdots \\ \hline D_2 \\ \hline D_1 \end{pmatrix} \qquad (6)$$

avec

$$B = \begin{pmatrix} b_1^1 & b_1^2 & \cdots & b_1^K \\ b_2^1 & b_2^2 & \cdots & b_2^K \\ \vdots & \vdots & & \vdots \\ b_{Q+W-1}^1 & b_{Q+W-1}^2 & \cdots & b_{Q+W-1}^K \end{pmatrix} \text{ et } D_i = \begin{pmatrix} d_i^1 \\ d_i^2 \\ \vdots \\ d_i^K \end{pmatrix} \qquad (7)$$

Une solution classique pour résoudre un système tel que (4) est la méthode des moindres carrés, suivant laquelle on détermine le vecteur D à N composantes continues qui minimise l'erreur quadratique $\varepsilon = \|AD-Y\|^2$. Une discrétisation des composantes du vecteur D relative à chaque canal intervient ensuite, souvent par le biais d'un décodeur de canal. La solution D au sens des moindres carrés est donnée par : $D = (A^H A)^{-1} A^H Y$, où $A^H$ désigne la matrice transposée conjuguée de A. On est alors ramené au problème de l'inversion de la matrice hermitienne définie positive $A^H A$. Cette inversion peut être réalisée par divers algorithmes classiques, d'une manière directe (méthodes de Gauss, de Cholesky...) ou par des techniques itératives (algorithmes de Gauss-Seidel, du gradient...).

L'erreur d'estimation D - D est égale à $(A^H A)^{-1} A^H Y_N$, ce qui montre que la solution obtenue est affectée d'un bruit de variance :

$$\sigma^2 = E\left( \|D - \hat{D}\|^2 \right) = N_0 \times \text{Trace}\left[ \left( A^H A \right)^{-1} \right] \qquad (8)$$

où $N_0$ est la densité spectrale de puissance du bruit. On voit qu'il se produit une amplification du bruit quand la matrice $A^H A$ est mal conditionnée, c'est-à-dire quand elle a une ou plusieurs valeurs propres proches de 0.

Cette amplification du bruit est le principal inconvénient des méthodes de résolution classiques. Dans la pratique, les cas de mauvais conditionnement de la matrice $A^H A$ sont fréquents, particulièrement en présence de trajets multiples de propagation.

On connaît un moyen relativement simple de remédier en partie à cet inconvénient, en acceptant dans la solution un résidu d'interférence, c'est-à-dire en adoptant non pas la solution optimale au sens des moindres carrés, mais la solution: $D_{MMSE} = (A^H A + N_0)^{-1} A^H Y$, où $N_0$ désigne une estimation de la densité spectrale du bruit, que le récepteur doit alors calculer. Cette méthode est connue sous le nom de MMSE (minimum mean square error). Elle permet de diminuer la variante d'estimation, mais en introduisant un biais.

DE 196 16 829 décrit un système de radiocommunication CDMA utilisant un procédé d'égalisation faisant appel à la méthode MMSE.

La présente invention a pour but de pallier les limitations ci-dessus des méthodes connues d'égalisation conjointe, et de proposer un bon compromis entre la fiabilité des estimations et la complexité de l'égaliseur.

L'invention propose ainsi un procédé d'égalisation numérique, pour estimer, à partir d'un vecteur Y de L échantillons numériques d'un signal reçu, les symboles discrets d'au moins un signal transmis faisant partie des composantes d'un vecteur D de taille N, le vecteur Y pouvant être décomposé en $Y=AD+Y_N$ où A est une matrice de L lignes et N colonnes préalablement déterminée à partir de mesures de la réponse d'au moins. un canal de transmission et $Y_N$ représente un vecteur de- L échantillons de bruit. Ce procédé comprend les étapes suivantes :

- déterminer une matrice triangulaire supérieure T de N lignes et N colonnes et un vecteur Z de taille N tels que les critères quadratiques $\|TX-Z\|^2$ et $\|AX-Y\|^2$ soient minimaux pour le même vecteur X de taille N ;
- diviser le vecteur Z en J blocs $Z_i$ ($1 \leq i \leq J$) et la matrice T en $J(J+1)/2$ blocs $T_{i,j}$ ($1 \leq j \leq i \leq J$), J étant un entier plus grand que 1, le bloc $Z_i$ étant formé de $N_i$ composantes du vecteur Z, avec

$$\sum_{i=1}^{J} N_i = N,$$

et le bloc $T_{i,j}$ étant formé de $N_i$ lignes et $N_J$ colonnes, sous la forme:

$$Z = \begin{pmatrix} Z_J \\ \vdots \\ \vdots \\ Z_2 \\ Z_1 \end{pmatrix}, \quad \text{et} \quad T = \begin{pmatrix} T_{J,J} & \cdots & \cdots & T_{J,2} & T_{J,1} \\ 0 & \ddots & & \vdots & \vdots \\ \vdots & \ddots & \ddots & \vdots & \vdots \\ 0 & & \ddots & T_{2,2} & T_{2,1} \\ 0 & \cdots & \cdots & 0 & T_{1,1} \end{pmatrix} \quad (9)$$

- estimer $N_1$ des symboles discrets, comme étant les composantes d'un vecteur $\hat{D}_1$ égal à celui des vecteurs $X_1$, formés de $N_1$ composantes prenant les différentes valeurs possibles des symboles discrets, qui minimise la quantité $\|T_{1,1}X_1-Z_1\|^2$.

Le procédé exploite l'information a priori que les inconnues qu'on cherche à estimer (les symboles du vecteur D) prennent des valeurs discrètes. La prise en compte de cette information a priori permet de surmonter en partie les singularités éventuelles du système linéaire (4).

La triangularisation du problème, c'est-à-dire le passage de la matrice A à la matrice triangulaire T dans le critère quadratique à minimiser, simplifie dans une large mesure la recherche de l'optimum par l'exploration des différentes valeurs discrètes possibles des symboles.

La subdivision en blocs de la matrice triangulaire T permet un traitement itératif pour estimer successivement les symboles par blocs de taille Ni. Le procédé peut ainsi comprendre l'étape suivante exécutée successivement pour chacune des valeurs de i allant i=2 à i=imax, l'entier imax étant tel que $2 \leq imax \leq J$ :

- estimer Ni des symboles discrets, comme étant les composantes d'un vecteur $\hat{D}_i$ égal à celui des vecteurs $X_i$,

formés de $N_i$ composantes prenant les différentes valeurs possibles des symboles discrets, qui minimise la quantité

$$\left\| T_{i,i}X_i + \sum_{j=1}^{i-1} T_{i,j}\hat{D}_j - Z_i \right\|^2 .$$

Si on décompose les vecteurs X de taille N en J blocs $X_i$ de taille $N_i$ de manière semblable au vecteur Z

$$\left( X = \begin{pmatrix} X_J \\ \vdots \\ X_1 \end{pmatrix} \right),$$

et si note

$$\varepsilon_1 = \left\| T_{1,1}X_1 - Z_1 \right\|^2$$

et, pour $2 \le i \le J$,

$$\varepsilon_i = \left\| T_{i,i}X_i - \tilde{Z}_i \right\|^2$$

avec

$$\tilde{Z}_i = Z_i - \sum_{j=1}^{i-1} T_{i,j}X_j ,$$

le critère quadratique global à minimiser est

$$\left\| TX - Z \right\|^2 = \sum_{i=1}^{J} \varepsilon_i$$

. En procédant à la minimisation bloc par bloc (c'est-à-dire en calculant $\hat{D}_1$ comme le $X_1$ à valeurs discrètes qui minimise $\varepsilon_1$, puis $D_2$ comme le $X_2$ à valeurs discrètes qui minimise $\varepsilon_2$ avec $X_1 = D_1$ dans l'expression de $\tilde{Z}_2$, puis $D_3$ comme le $X_3$ à valeurs discrètes qui minimise $\varepsilon_3$ avec $X_1 = D_1$ et $X_2 = D_2$ dans L'expression de $\tilde{Z}_3$, etc.) , on n'aboutit certes pas à la solution discrète optimale D dans le cas général, mais on est très proche de la solution optimale, et on diminue de façon très appréciable la complexité de la résolution.

Le système linéaire est résolu de façon complète lorsque imax=J. Il est également possible de procéder à un plus petit nombre d'itérations (à la limite à une seule), par exemple dans des cas où le récepteur a besoin d'estimer les signaux transmis sur seulement certains des canaux. Dans ce cas, le processus algébrique conduisant de la matrice A à la matrice T permet une certaine prise en compte des caractéristiques de la réponse des autres canaux, qui peut procurer un gain sur la vraisemblance des estimations.

Dans le procédé selon l'invention énoncé ci-dessus, chaque itération conduit à la détermination d'un seul vecteur $D_i$. La solution obtenue étant généralement sous-optimale, on peut améliorer les performances en retenant plusieurs vecteurs candidats à chaque itération (sur la base des vecteurs discrets pour lesquels le critère $\varepsilon_i$ prend les valeurs les plus faibles), et en sélectionnant à la fin de la boucle le jeu de vecteurs candidats qui aura conduit à la minimisation du critère global. Dans cette variante, après avoir déterminé la matrice T et le vecteur Z et les avoir divisés en blocs, on exécute successivement l'étape suivante pour chacune des valeurs de i allant de i=1 à i=imax :

- déterminer un nombre $M_i \geq 1$ de vecteurs d'estimations $\hat{E}_i^{(m)}$ $(1 \leq m \leq M_i)$, formés de

$$P_1 = \sum_{j=1}^{1} N_j$$

composantes dont les valeurs sont parmi les différentes valeurs possibles des symboles discrets, de la forme

$$\hat{E}_i^{(m)} = \left( \frac{X_i^{(m)}}{\hat{E}_{i-1}^{(m')}} \right),$$

où $\hat{E}_{i-1}^{(m')}$ est un vecteur d'estimations de taille $P_{i-1}$ déterminé à l'étape précédente si i>1 $(1 \leq m' \leq M_{i-1})$ et $X_i^{(m)}$ est un vecteur de taille $N_i$, ces $M_i$ vecteurs d'estimations $\hat{E}_i^{(m)}$ minimisant la quantité :

$$\delta_i^{(m)} = \delta_{i-1}^{(m')} + \left\| T_{i,1}\, X_1^{(m)} - \tilde{z}_i^{(m')} \right\|^2 \qquad (10)$$

avec $\delta_0^{(m')} = 0, \tilde{z}_1^{(m')} = Z_1$, et, pour i>1 :

$$\tilde{z}_i^{(m')} = Z_i - \left( T_{i,i-1} \mid \cdots \mid T_{i,2} \mid T_{i,1} \right) \hat{E}_{i-1}^{(m')} \qquad (11)$$

Le nombre $M_{imax}$ étant égal à 1, $P_{imax}$ des symboles discrets sont alors estimés par les composantes du vecteur d'estimations $\hat{E}_{imax}^{(1)}$.

Un autre aspect de la présente invention se rapporte à un récepteur de radiocommunication, comprenant des moyens de conversion pour produire des vecteurs successifs de L échantillons numériques à partir d'un signal radio reçu, des moyens de mesure de la réponse d'au moins un canal de transmission permettant de déterminer, pour chacun desdits vecteurs Y, une matrice A de L lignes et N colonnes telle que le vecteur Y puisse être décomposé en $Y=AD+Y_N$, où D est un vecteur de taille N formé de symboles discrets d'au moins un signal transmis, et $Y_N$ représente un vecteur de L échantillons de bruit, et des moyens d'égalisation mettant en oeuvre un procédé d'égalisation numérique tel que défini ci-dessus pour estimer, à partir de chaque vecteur Y, les symboles discrets d'au moins un signal transmis faisant partie des composantes du vecteur D correspondant.

D'autres particularités et avantages de la présente invention apparaîtront dans la description ci-après d'exemples de réalisation non limitatifs, en référence aux dessins annexés, dans lesquels :

- la figure 1 est un schéma synoptique d'un exemple de récepteur de radiocommunication selon l'invention ;
- les figures 2 et 3 sont des organigrammes montrant les étapes de deux modes de réalisation du procédé d'égalisation selon l'invention ;
- la figure 4 est un diagramme illustrant les performances du procédé en l'absence de codage/décodage de canal ; et
- la figure 5 est un diagramme analogue à celui de la figure 4 avec codage/décodage de canal.

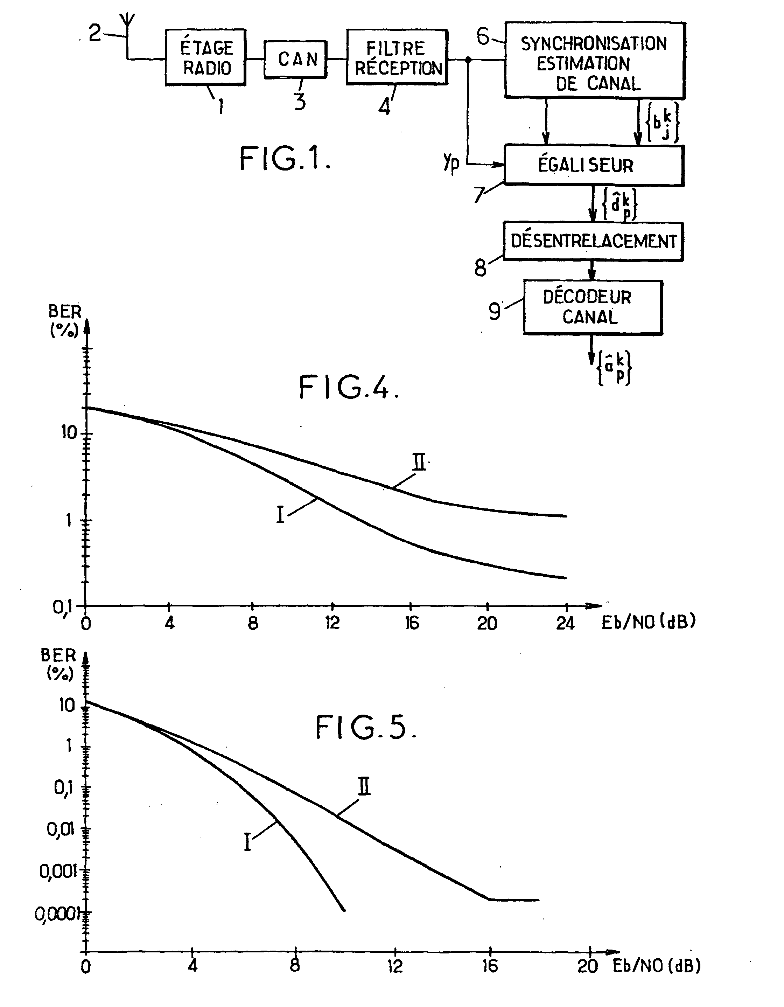

On suppose que les signaux radio traités par le récepteur de la figure 1 sont des signaux CDMA reçus selon K canaux logiques différenciés par leurs séquences d'étalement respectives $c^k$ comme expliqué précédemment.

Le récepteur représenté sur la figure 1 comporte un étage radio 1 qui reçoit le signal radio capté par l'antenne 2 et le convertit en bande de base. Le signal en bande de base est numérisé par un convertisseur analogique-numérique 3, puis fourni à un filtre de réception 4. Le filtre 4 assure un filtrage adapté à la mise en forme des signaux par l'émetteur. Il délivre un signal numérique à raison d'un échantillon complexe par chip des séquences d'étalement.

Ce signal numérique est fourni à un démodulateur comprenant d'une part un module 6 de synchronisation et d'estimation de canal, et d'autre part un égaliseur 7.

La synchronisation et l'estimation de canal sont par exemple effectuées de manière classique à l'aide d'une séquence de synchronisation incluse par l'émetteur dans chaque trame de signal. La détection de cette séquence, connue du récepteur, permet d'une part de synchroniser le récepteur par rapport à la structure temporelle des trames émises, et d'autre part d'estimer la réponse impulsionnelle $r^k$ du canal $k$ sur lequel les trames sont transmises. Après avoir calculé les réponses impulsionnelles $r^k$ des différents canaux pris en considération, le module 6 calcule les termes $b^k_j$ conformément à la relation (2) pour $1{\leq}k{\leq}K$ et $1{\leq}j{\leq}L'=Q+W-1$, et les fournit à l'égaliseur 7.

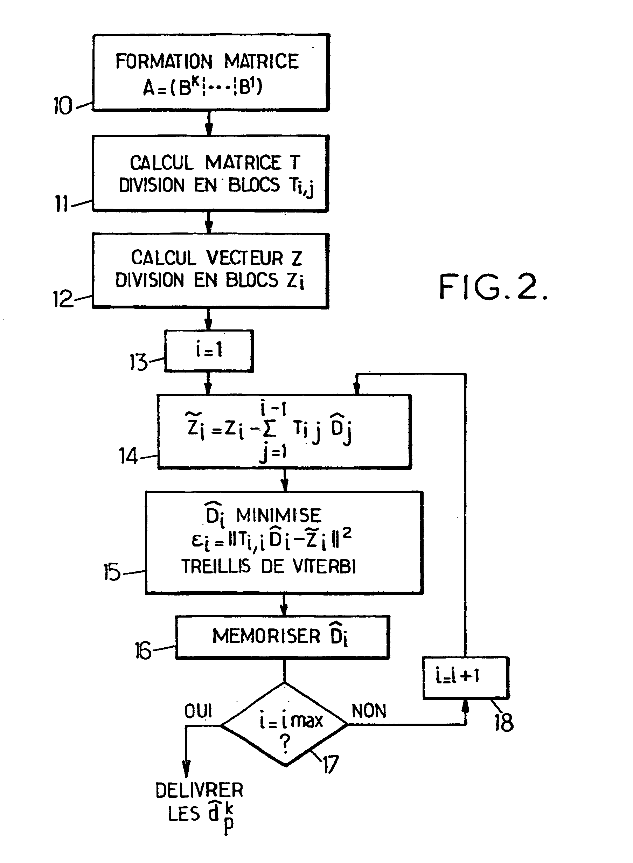

L'égaliseur 7 fonctionne par exemple conformément à l'organigramme représenté sur la figure 2 pour traiter chaque trame synchronisée du signal reçu, se présentant sous la forme d'un vecteur

$$Y=\begin{pmatrix} Y_1 \\ \vdots \\ Y_L \end{pmatrix},$$

avec $L=nQ+W-1$ en reprenant les notations précédentes.

Dans une première étape 10, l'égaliseur 7 forme la matrice A de la manière indiquée dans les relations (5) ci-dessus, par juxtaposition de K blocs $B^k$ de L lignes et $N=nQ$ colonnes, définis à partir des termes $b^k_j$ comme indiqué dans la relation (3).

L'égaliseur 7 calcule ensuite une matrice triangulaire supérieure T de taille NxN et un vecteur Z de taille N tels que les critères quadratiques $\|TX-Z\|^2$ et $\|AX-Y\|^2$ soient liés entre eux par une fonction croissante indépendante du vecteur X de taille N ($X{\in}\not\subset^N$), de telle sorte que la minimisation des deux critères sur un sous-ensemble quelconque de $\not\subset^N$ (notamment sur le sous-ensemble $\Phi^N$, où $\Phi$ désigne l'ensemble discret des valeurs possibles des symboles $d^k_p$) soit réalisée par le même vecteur X. Plusieurs méthodes sont utilisables pour calculer cette matrice T et ce vecteur Z.

On peut notamment utiliser la méthode de Cholesky pour factoriser la matrice hermitienne définie positive $A^HA$ sous la forme :

$$A^HA = \Gamma^H\Gamma \tag{12}$$

où $\Gamma$ est une matrice triangulaire supérieure. La matrice T peut être prise proportionnelle au facteur de Cholesky $r$ vérifiant la relation (12), multiplié par un coefficient complexe arbitraire $\alpha{\neq}0$ (par exemple $\alpha=1$), auquel cas la matrice $A^HA$ est proportionnelle à $T^HT$ dans un rapport $1/|\alpha|^2$ :

$$A^HA = \frac{T^HT}{|\alpha|^2} \tag{13}$$

Il existe de nombreux algorithmes classiques utilisables pour procéder de manière très efficace à la factorisation de Cholesky d'une matrice hermitienne définie positive. On pourra par exemple se référer à l'ouvrage de Golub & Loane : "Matrix Computation", éditions Baltimore M.B.

Après avoir ainsi calculé la matrice T à l'étape 11, l'égaliseur 7 la subdivise en blocs $T_{i,j}$ de taille $N_i{\times}N_j$ de la manière indiquée dans l'expression.(9).

Il est avantageux d'effectuer la division en blocs de façon telle que $J=K$ et $N_i=n$ pour $1{\leq}i{\leq}J$. Compte tenu de l'organisation retenue pour la matrice A (forme (5)), la matrice $A^HA$ a ainsi sur sa diagonale principale des blocs de taille $n{\times}n$ respectivement égaux aux matrices de Toeplitz

$$\left(B^k\right)^H B^k$$

. Dans ces conditions, tous les blocs diagonaux $T_{i,i}$ de la matrice T sont des matrices triangulaires supérieures de taille nxn qui, avec une très bonne approximation, ont une structure de type Toeplitz le long de leur diagonale principale.

A l'étape 12, l'égaliseur 7 calcule le vecteur Z de la manière de la manière suivante :

$$Z = |\alpha|^2 \left(T^H\right)^{-1} A^H Y \qquad\qquad (14)$$

qui nécessite l'inversion de la matrice triangulaire inférieure $T^H$. L'inversion d'une telle matrice peut être effectuée par diverses méthodes numériques dont la mise en oeuvre est très rapide.

La matrice T et le vecteur Z étant choisis conformément aux relations (13) et (14), on peut vérifier que :

$$\|TX - Z\|^2 = |\alpha|^2 \|AX - Y\|^2 + \beta,$$

où $|\alpha|^2 > 0$ et

$$\beta = \|Z\|^2 - \|\alpha Y\|^2$$

sont des nombres réels indépendants de X. Ceci démontre que les critères quadratiques $\|TX-Z\|^2$ et $\|AX-Y\|^2$ sont minimisés par le même vecteur X.

A l'étape 12, le vecteur Z est en outre subdivisé en blocs $Z_i$ ($1 \le i \le J$) de taille $N_i$ comme indiqué dans l'expression (9). L'égaliseur procède ensuite à une boucle de calcul initialisée par i=1 à l'étape 13, pour estimer les symboles du vecteur D par blocs successifs $D_i$ de taille $N_i$. On note $\hat{D}_i$ le vecteur de $N_i$ estimations obtenu à la i-ième itération de cette boucle.

Chaque itération commence, à l'étape 14, par le calcul d'un vecteur $\tilde{z}_i$. Ce vecteur $\tilde{z}_i$ de taille $N_i$ est égal à $Z_1$ pour i=1, et à

$$\tilde{z}_i = Z_i - \sum_{j=1}^{i-1} T_{i,j} \hat{D}_j$$

pour i>1.

A l'étape 15, l'égaliseur calcule le vecteur d'estimations $\hat{D}_i$ comme étant celui des vecteurs $X_i$ de taille $N_i$, dont les composantes prennent les différentes valeurs possibles des symboles discrets $d_p^k$ ($X_i \in \Phi^{N_i}$), qui minimise le critère quadratique

$$\varepsilon_i = \left\| T_{i,i} X_i - \tilde{z}_i \right\|^2 .$$

Dans le cas préféré où J=K et $N_1 = ... = N_J = n$, le fait qu'on puisse faire l'approximation du bloc $T_{i,i}$ par une matrice triangulaire supérieure ayant la structure de type Toeplitz le long de sa diagonale principale permet d'effectuer la minimisation à l'étape 15 en utilisant un algorithme séquentiel à treillis fournissant la solution optimale au sens du maximum de vraisemblance, par exemple l'algorithme de Viterbi. La complexité du treillis de Viterbi correspond à celle requise pour l'égalisation d'un canal unique, avec n symboles successifs à estimer et une longueur de réponse impulsionnelle de l'ordre de W/Q symboles. On voit alors que le procédé d'égalisation conjointe de K canaux selon l'invention n'implique pas une complexité excessive par rapport à des égalisations séparées des différents canaux. La complexité supplémentaire se limite essentiellement à des opérations qui peuvent être effectuées de manière rapide, à savoir la factorisation de la matrice $A^H A$ par la méthode de Cholesky ou analogue pour le calcul de la matrice T, l'inversion de la matrice triangulaire $T^H$, et les combinaisons linéaires des étapes 14.

La i-ième itération dans la boucle se termine à l'étape 16 par la mémorisation du vecteur d'estimations obtenu $\hat{D}_i$. Celui-ci correspond à l'estimation du vecteur $D^k$ défini dans la relation (3) avec k=i, c'est-à-dire qu'il contient les estimations des n symboles $d_1^k$ à $d_n^k$ de la trame émise sur le canal

$$k=i \; : \quad \hat{D}_i = \hat{D}_k = \begin{pmatrix} \hat{d}_1^k \\ \vdots \\ \hat{d}_n^k \end{pmatrix} .$$

L'index i est comparé au nombre prédéfini imax d'itérations dans la boucle à l'étape 17. Si i<imax, l'index i est incrémenté à l'étape 18 avant de revenir à l'étape 14 pour l'itération relative au canal suivant. Quand i=imax, l'égaliseur a terminé les calculs pour la trame courante, et il délivre les estimations $d_p^k$ des symboles concernant les différents canaux. Lorsque le récepteur a besoin d'estimer les symboles pour chacun des K canaux, on prend imax=J=K.

En général, les symboles $d_p^k$ émis sur un canal sont fournis par un dispositif de codage de canal servant à protéger les symboles d'information transmis $a_p^k$ contre les erreurs. Dans le cas de canaux radiomobiles, le codage de canal proprement dit, qui introduit de la redondance selon un code permettant de détecter et/ou de corriger des erreurs, est généralement suivi par un entrelacement afin de disperser les erreurs qui apparaissent fréquemment par paquets sur ce type de canal. Au récepteur, les symboles estimés $d_p^k$, délivrés pour chaque canal k par l'égaliseur 7, sont adressés à un module de désentrelacement 8 (figure 1) puis à un décodeur de canal 9 qui exploite la redondance de codage pour détecter et corriger d'éventuelles erreurs de transmission et fournir finalement les estimations $a_p^k$ des symboles d'information pertinents pour le canal k.

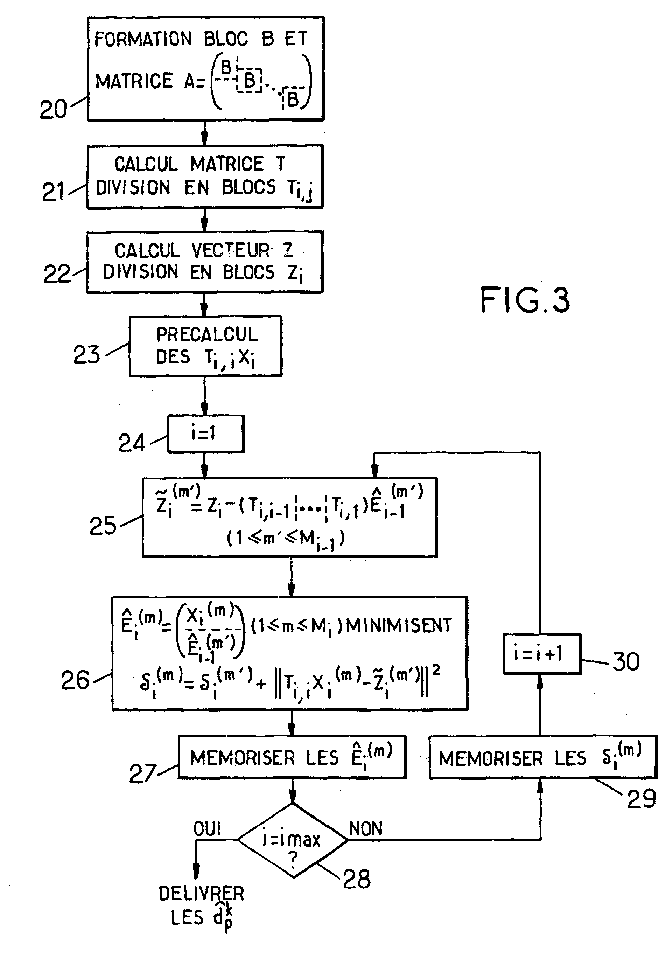

Le mode de réalisation illustré par la figure 3 diffère principalement de celui de la figure 2 sur les deux points suivants :

- la matrice A est organisée de la manière indiquée dans les relations (6) et (7); et
- à chaque itération i, il est retenu un nombre $M_i$ de vecteurs d'estimations pour lesquels le critère quadratique présente les $M_i$ plus petites valeurs.

Le fait de retenir $M_i \geq 1$ vecteurs d'estimations de taille

$$P_i = \sum_{j=1}^{i} N_j$$

lors d'une itération i améliore l'optimisation en évitant d'éliminer certaines valeurs de symboles qui pourraient paraître sous-optimales au cours de l'itération dans laquelle ces symboles sont estimés, mais qui pourraient être jugées meilleures a posteriori en considérant le critère global $\|TX-Z\|^2$. Le cas limite où $M_1=...=M_{imax}=1$ correspond au cas précédent.

Dans le mode de réalisation de la figure 3, l'égaliseur 7 forme d'abord, à l'étape 20, le bloc B de taille L'xK et la matrice A de taille L×N selon les relations (6) et (7). Aux étapes 21 et 22, il procède ensuite au calcul de T et de Z et à leur division en blocs $T_{i,j}$ et $Z_i$ de la même manière qu'aux étapes 11 et 12 décrites en référence à la figure 2.

Il est ici avantageux d'effectuer la division en blocs de façon telle que J=n et $N_i$=K pour $1 \leq i \leq J$. Compte tenu de l'organisation retenue pour la matrice A (forme (6)), la matrice $A^H A$ a ainsi sur sa diagonale principale des blocs de taille KxK identiques, égaux à la matrice $B^H B$. Dans ces conditions, tous les blocs diagonaux $T_{i,i}$ de la matrice T sont identiques avec une très bonne approximation (un effet de bord négligeable peut faire légèrement s'écarter les blocs diagonaux les plus proches du coin supérieur gauche de la matrice T ($i \approx J$)).

Dans ce cas, comme indiqué à l'étape 23, on peut calculer à l'avance tous les termes de la forme $T_{i,i}X_i$ qui seront ensuite utilisés dans la boucle ($X_i \in \Phi^K$), en prenant une matrice $T_{i,i}$ unique égale à $T_{1,1}$, c'est-à-dire proportionnelle au facteur de Cholesky de la matrice $B^H B$ ($T_{i,i}^H T_{i,i} = |\alpha|^2 . B^H B$). Ces termes sont au nombre de $2^K$ dans le cas de symboles binaires.

La boucle d'optimisation est initialisée par i=1 à l'étape 24. A l'étape 25, l'égaliseur calcule $M_{i-1}$ vecteurs $\tilde{z}_i^{(m')}$ conformément à la relation (11) pour $1 \leq m' \leq_{i-1}$. Cette étape 25 est sans objet lors de la première itération ($M_0=0$ et $\tilde{z}_1^{(0)}:=Z_1$).

A l'étape 26, l'égaliseur détermine, en balayant les termes précalculés $T_{i,i}X_i$ et, si i>1, les $M_{i-1}$ vecteurs d'estimations $\hat{E}_{i-1}^{(m')}$ déterminés à l'itération précédente, quels sont les $M_i$ vecteurs d'estimations $\hat{E}_i^{(m)}$ ($1 \leq m \leq M_i$), de taille $P_i$ et de la forme

$$\hat{E}_i^{(m)} = \begin{pmatrix} X_i^{(m)} \\ \hline \hat{E}_{i-1}^{(m')} \end{pmatrix}$$

(pour i=1 : $\hat{E}_1^{(m)} = X_1$), qui minimisent le critère $\delta_i^{(m)}$ donné par la relation (10) (soit, pour i=1, le critère:

$$\delta_1^{(m)} = \left\| T_{1,1} \, X_1^{(m)} - Z_1 \right\|$$

).

La i-ième itération dans la boucle se termine à l'étape 27 par la mémorisation des $M_i$ vecteurs d'estimations obtenus $\hat{E}_i^{(m)}$. Ceux-ci contiennent des estimations provisoires des $P_i$ derniers symboles du vecteur D organisé comme dans les relations (6). Tant que i<imax (test 28), les $M_i$ critères minimaux $\delta_i^{(m)}$ ($1 \le m \le M_i$) sont également mémorisés à l'étape 29 pour être utilisés dans l'itération suivante, puis l'index i est incrémenté à l'étape 30 avant de revenir à l'étape 25 pour l'itération suivante. Quand i=imax, l'égaliseur a terminé les calculs pour la trame courante, et il délivre les estimations $d_p^k$ des symboles concernant les différents canaux. Ces estimations sont extraites du vecteur $\hat{E}_{imax}^{(1)}$, étant noté qu'il, suffit de prendre $M_{imax} = 1$. Lorsque le récepteur a besoin d'estimer chacun des n symboles de chaque trame, on prend imax=J=n.

La figure 4 illustre les performances de l'égalisation conjointe selon le procédé ci-dessus (courbe I) par rapport à une égalisation conjointe effectuée de façon classique par la méthode MMSE (courbe II), en montrant la dépendance entre le taux d'erreur binaire BER observé dans les estimations $d_p^k$ des symboles $d_p^k$ -(hors codage/décodage de canal), exprimé en %, et le rapport Eb/NO entre l'énergie par bit et la densité spectrale de puissance du bruit, exprimé en décibels. Ces courbes ont été obtenues par simulation informatique dans des conditions représentatives d'une application à la radiotéléphonie cellulaire, à savoir :

- simulation de liaison montante à 2 GHz vers une station de base réceptrice, depuis K=8 stations mobiles ayant chacune une séquence d'étalement propre $c^k$ de longueur Q=8;
- la modulation utilisée est de type BPSK, les symboles $d_p^k$ et les chips $c_q^k$ étant binaires (±1);
- les trames sont constituées de n=56 symboles de durée 3,69 μS;
- canal de type VEHICULAR A avec une vitesse des mobiles de 100 km/h.

Dans ces simulations, le procédé selon l'invention tel que décrit ci-dessus a été utilisé avec la forme (6) pour la matrice A, avec J=n=imax=56, $N_1$=...=$N_J$=K=8 et $M_1$=...=$M_J$=1. La figure 4 montre l'amélioration sensible que procure l'égalisation conjointe conforme à l'invention.

La figure 5 montre les résultats obtenus, au cours des mêmes simulations, en termes de taux d'erreur binaire BER observé dans les estimations $\hat{a}_p^k$ des symboles $a_p^k$, lorsqu'il est fait appel à un codage de canal avec un code convolutif de rendement 1/3 et de longueur de contrainte 9 et à un entrelacement des symboles émis sur une durée correspondant à quatre trames. Pour un BER de 0,1 %, le gain en puissance est de l'ordre de 2 dB.

Diverses méthodes algébriques autres que la factorisation de Cholesky considérée ci-dessus peuvent être utilisées pour fournir la matrice triangulaire T et le vecteur Z tels que le même vecteur X minimise les deux critères quadratiques $\|TX-Z\|^2$ et $\|AX-Y\|^2$.

Par exemple, on peut également triangulariser la matrice A par la méthode de Householder (voir l'ouvrage précité de Golub & Loane). Cette méthode fournit une matrice unitaire U de taille LxL telle que le produit UA, qui est une matrice LxN, soit de la forme :

$$UA = \begin{pmatrix} x & x & \cdots & x \\ 0 & x & & \\ \vdots & 0 & \ddots & \\ & & \ddots & x \\ & & & 0 \\ \vdots & & & \vdots \\ 0 & \cdots & \cdots & 0 \end{pmatrix} = \begin{pmatrix} \Gamma' \\ 0 \end{pmatrix} \qquad (15)$$

c'est-à-dire soit formée par un premier bloc $\Gamma'$ de taille NxN de structure triangulaire supérieure et par un second bloc de L-N lignes de zéros. On peut alors prendre $T=\alpha\Gamma'$, où $\alpha$ est un coefficient complexe arbitraire non nul (par exemple $\alpha=1$). En subdivisant le vecteur UY de taille L en deux blocs Y' et Y" de tailles respectives N et L-N, soit

$$UY = \begin{pmatrix} Y' \\ Y'' \end{pmatrix},$$

on peut choisir $Z=\alpha Y'$. Avec ce choix, les critères quadratiques $\|TX-Z\|^2$ et $\|AX-Y\|^2$ sont encore liés par une relation $\|TX-Z\|^2 |\alpha|^2 \|AX-Y\|^2 + \beta$, où $|\alpha|^2 > 0$ et $\beta = -\|\alpha Y''\|^2$ sont des nombres réels indépendants de X. Le procédé décrit plus haut est donc applicable dans des conditions comparables.

D'autre part, on observera que la matrice triangulaire supérieure T pourrait, de façon rigoureusement équivalente, être remplacée par une matrice triangulaire inférieure. Ce remplacement peut être effectué en adaptant simplement la méthode algébrique employée pour passer de la matrice A à la matrice T, ou encore en inversant l'ordre des composantes dans les vecteurs Y et D.

Le domaine d'application du procédé ci-dessus n'est pas limité aux radiocommunications CDMA.

Par exemple, toujours dans le domaine des radiocommunications, on peut considérer le cas particulier où Q=1 dans les explications ci-dessus. Dans ce cas, lorsque la matrice A est construite selon l'expression (5), le nombre L de lignes de la matrice A et des blocs $B^k$ est égal à n+W-1; où W est la longueur de l'estimation de la réponse impulsionnelle d'un canal, exprimée en nombre de symboles des signaux, les blocs $B^k$ ayant chacun une structure de type Toeplitz le long de la diagonale principale. Lorsque la matrice A est construite selon l'expression (6), le nombre L' de lignes du bloc B correspond à la longueur W de l'estimation de la réponse impulsionnelle du canal, exprimée en nombre de symboles des signaux, les blocs B répétés étant décalés d'une ligne.

Dans ce cas, on est ramené à un système sans étalement de spectre. Le procédé permet alors une prise en compte par le récepteur d'interféreurs synchrones, qui peuvent notamment être rencontrés dans les réseaux cellulaires à accès multiple par répartition temporelle et/ou fréquentielle (TDMA/FDMA). Considérons par exemple le cas d'un réseau cellulaire de type GSM (mixte TDMA/FDMA) dans lequel les stations de base d'un ensemble de cellules couvrant une zone géographique donnée seraient synchronisées. Deux cellules de cet ensemble réutilisant les mêmes fréquences peuvent être différenciées par les séquences de synchronisation incluses dans les trames de signaux transmis. Ces séquences différentes permettent d'évaluer séparément les réponses impulsionnelles de canaux partageant la même porteuse en même temps, et sur lesquels sont transmis des signaux en provenance de cellules différentes. Dans ce cas, le procédé tel que décrit ci-dessus peut être utilisé pour égaliser le canal pertinent pour le récepteur, en traitant le signal transmis sur le ou les autres canaux non pas. comme du bruit comme c'est habituellement le cas, mais comme des signaux construits de la manière prescrite dans le système de radiocommunication. Les symboles véhiculés par ces derniers signaux ne sont pas nécessairement estimés explicitement (on peut prendre imax<J), leur prise en compte intervenant implicitement dans la transformation algébrique conduisant à la matrice triangulaire T.

De façon générale, le procédé selon l'invention est applicable chaque fois que les symboles devant être estimés sont des composantes d'un vecteur D tel qu'un vecteur de signal reçu Y puisse être modélisé par un système linéaire de la forme (4) (voir J.G. Proakis : "Digital Communications", éditions MacGraw-Hill, New-York, 1982).

**Revendications**

**1.** Procédé d'égalisation numérique, pour estimer, à partir d'un vecteur Y de L échantillons numériques d'un signal reçu, les symboles discrets ($d_p^k$) d'au moins un signal transmis faisant partie des composantes d'un vecteur D de taille N, le vecteur Y pouvant être décomposé en $Y=AD+Y_N$, où A est une matrice de L lignes et N colonnes préalablement déterminée (10) à partir de mesures de la réponse d'au moins un canal de transmission et $Y_N$ représente un vecteur de L échantillons de bruit, **caractérisé en ce qu'**il comprend les étapes suivantes:

- déterminer (11) une matrice triangulaire supérieure T de N lignes et N colonnes et un vecteur Z (12) de taille N tels que les critères quadratiques $\|TX\text{-}Z\|^2$ et $\|AX\text{-}Y\|^2$ soient minimaux pour le même vecteur X de taille N ;
- diviser (12) le vecteur Z en J blocs $Z_i$ ($1 \leq i \leq J$) et la matrice T en $J(J+1)/2$ blocs $T_{i,j}$ ($1 \leq j \leq i \leq J$), J étant un entier plus grand que 1, le bloc $Z_i$ étant formé de $N_i$ composantes du vecteur Z, avec

$$\sum_{i=1}^{J} N_i = N \, ,$$

et le bloc $T_{i,j}$ étant formé de $N_i$ lignes et $N_j$ colonnes, sous la forme :

$$
Z = \begin{pmatrix} Z_J \\ \hline \vdots \\ \vdots \\ \hline Z_2 \\ \hline Z_1 \end{pmatrix}, \;\; et \;\; T = \begin{pmatrix} T_{J,J} & \cdots & \cdots & T_{J,2} & T_{J,1} \\ \hline 0 & \ddots & & \vdots & \vdots \\ \hline \vdots & \ddots & \ddots & \vdots & \vdots \\ \hline 0 & & \ddots & T_{2,2} & T_{2,1} \\ \hline 0 & \cdots & \cdots & 0 & T_{1,1} \end{pmatrix} ;
$$

- estimer (15) $N_1$ des symboles discrets, comme étant les composantes d'un vecteur $\hat{D}_1$ égal à celui des vecteurs $X_1$, formés de $N_1$ composantes prenant les différentes valeurs possibles des symboles discrets, qui minimise la quantité $\|T_{1,1}X_1\text{-}Z_1\|^2$ .

**2.** Procédé selon la revendication 1, comprenant en outre l'étape suivante exécutée successivement pour chacune des valeurs de i allant i=2 à i=imax, l'entier imax étant tel que $2 \leq imax \leq J$ :

- estimer $_{Ni}$ des symboles discrets, comme étant les composantes d'un vecteur $\hat{D}_i$ égal à celui des vecteurs $X_i$, formés de $N_i$ composantes prenant les différentes valeurs possibles des symboles discrets, qui minimise la quantité

$$\left\| T_{i,i}X_i + \sum_{j=1}^{i-1} T_{i,j}\hat{D}_j - Z_i \right\|^2 .$$

**3.** Procédé d'égalisation numérique, pour estimer, à partir d'un vecteur Y de L échantillons numériques d'un signal reçu, les symboles discrets ($d^k_p$) d'au moins un signal transmis faisant partie des composantes d'un vecteur D de taille N, le vecteur Y pouvant être décomposé en $Y=AD+Y_N$, où A est une matrice de L lignes et N colonnes préalablement déterminée (20) à partir de mesures de la réponse d'au moins un canal de transmission et $Y_N$ représente un vecteur de L échantillons de bruit, **caractérisé en ce qu'**il comprend les étapes suivantes :

- déterminer (21) une matrice triangulaire supérieure T de N lignes et N colonnes et un vecteur Z de taille N tels que les critères quadratiques $\|TX\text{-}Z\|^2$ et $\|AX\text{-}Y\|^2$ soient minimaux pour le même vecteur X de taille N ; et
- diviser (22) le vecteur Z en J blocs $Z_i$ ($1 \leq i \leq J$) et la matrice T en $J(J+1)/2$ blocs $T_{i,j}$ ($1 \leq j \leq i \leq J$), J étant un entier plus grand que 1, le bloc $Z_i$ étant formé de $N_i$ composantes du vecteur Z, avec

$$\sum_{i=1}^{J} N_i = N,$$

et le bloc $T_{i,j}$ étant formé de $N_i$ lignes et $N_j$ colonnes, sous la forme

$$
Z = \begin{pmatrix} Z_J \\ \hline \vdots \\ \vdots \\ \hline Z_2 \\ \hline Z_1 \end{pmatrix}, \text{ et } 
T = \begin{pmatrix} T_{J,J} & \cdots & \cdots & T_{J,2} & T_{J,1} \\ \hline 0 & \ddots & & \vdots & \vdots \\ \vdots & \ddots & \ddots & \vdots & \vdots \\ \hline 0 & & \ddots & T_{2,2} & T_{2,1} \\ \hline 0 & \cdots & \cdots & 0 & T_{1,1} \end{pmatrix},
$$

et l'étape suivante exécutée successivement pour chacune des valeurs de i allant i=1 à i=imax, l'entier imax étant tel que $1 \leq imax \leq J$ :

- déterminer (26) un nombre $M_i \geq 1$ de vecteurs d'estimations $\hat{E}_i^{(m)}$ ($1 \leq m \leq M_i$), formés de

$$P_i = \sum_{j=1}^{i} N_j$$

composantes dont les valeurs sont parmi les différentes valeurs possibles des symboles discrets, de la forme

$$\hat{E}_i^{(m)} = \begin{pmatrix} X_i^{(m)} \\ \hline \hat{E}_{i-1}^{(m')} \end{pmatrix},$$

où $\hat{E}_{i-1}^{(m)}$ est un vecteur d'estimations de taille $P_{i-1}$ déterminé à l'étape précédente si i>1 ($1 < m' \leq M_{i-1}$) et $X_i^{(m}$ est un vecteur de taille $N_i$, ces $M_i$ vecteurs d'estimations $\hat{E}_1^{(m)}$ minimisant la quantité

$$\delta_i^{(m)} = \delta_{i-1}^{(m')} + \left\| T_{i,i} X_i^{(m)} - \tilde{z}_1^{(m')} \right\|^2,$$

avec $\delta_0^{(m'} = 0, \tilde{z}_1^{(m')} = Z_1$, et

$$\tilde{z}_i^{(m')} = Z_i - \left( T_{i,i-1} \mid \cdots \mid T_{i,2} \mid T_{i,1} \right) \hat{E}_{i-1}^{(m')}$$

pour 1>1,

et **en ce que**, le nombre $M_{imax}$ étant égal à 1, $P_{imax}$ des symboles discrets sont estimés par les composantes du

vecteur d'estimations $\hat{E}^{(1)}_{imax}$.

**4.** Procédé selon la revendication 2 ou 3, dans lequel imax=J.

**5.** Procédé selon l'une quelconque des revendications 1 à 4, dans lequel on organise la matrice A et le vecteur D de façon que la matrice A ait une structure de type Toeplitz par blocs, avec un même bloc B de L' lignes et K colonnes répété n fois, K étant le nombre de signaux transmis et n étant un nombre de symboles discrets d'une trame de chacun des K signaux, le vecteur D étant divisé en blocs correspondants $D_i$ de taille K :

$$A = \begin{pmatrix} B & 0 & \cdots & 0 \\ 0 & \ddots & & \vdots \\ & \ddots & B & 0 \\ \vdots & & & B \\ 0 & \ddots & 0 & \end{pmatrix}, \text{ et } D = \begin{pmatrix} D_n \\ \vdots \\ D_2 \\ D_1 \end{pmatrix}$$

et dans lequel on utilise les valeurs J=n et $N_1=...=N_J=K$ pour la division du vecteur Z et de la matrice T.

**6.** Procédé selon la revendication 5, dans lequel le nombre L' de lignes du bloc B correspond à la longueur W d'une estimation de la réponse impulsionnelle du canal, exprimée en nombre de symboles des signaux, les blocs B répétés étant décalés d'une ligne.

**7.** Procédé selon la revendication 5, dans lequel les signaux sont transmis par radio avec étalement de spectre au moyen de séquences d'étalement respectives $(c^k)$ modulant les symboles $(d^k_p)$ et ayant une cadence Q fois supérieure à celle des symboles, et dans lequel le nombre L' de lignes du bloc B est égal à Q+W-1, où w est la longueur d'une estimation de la réponse impulsionnelle d'un canal, exprimée en nombre d'échantillons des séquences d'étalement, les blocs B répétés étant décalés de Q lignes.

**8.** Procédé selon l'une quelconque des revendications 5 à 7, dans lequel les blocs diagonaux $T_{i,i}$ de la matrice T ($1\le i\le J$) sont identiques et tels que $T_{i,i}{}^H T_{i,i}$ soit proportionnelle à $B^H B$, et dans lequel on calcule d'avance les vecteurs $T_{i,i}X_i$, où $X_i$ est , un vecteur de taille K dont les composantes prennent les différentes valeurs possibles des symboles discrets $(d^k_p)$.

**9.** Procédé selon l'une quelconque des revendications 1 à 4, dans lequel on organise la matrice A et le vecteur D de façon que la matrice A se compose de la juxtaposition de K blocs $B^k$ de L lignes et n colonnes, chaque bloc $B^k$ ayant une structure de type Toeplitz avec des zéros au-dessus de sa diagonale principale, K étant le nombre de signaux transmis et n étant un nombre de symboles discrets d'une trame de chacun des K signaux, le vecteur D étant divisé en blocs correspondants $D^k$ de taille n :

$$A = \left( B^K \mid \cdots \mid B^2 \mid B^1 \right), \text{ et } D = \begin{pmatrix} D^K \\ \vdots \\ D^2 \\ D^1 \end{pmatrix},$$

et dans lequel on utilise les valeurs J=K et $N_1=...=N_J=n$ pour la division du vecteur Z et de la matrice T.

**10.** Procédé selon la revendication 9, dans lequel le nombre L de lignes de la matrice A et des blocs $B^k$ est égal à n+W-1, où W est la longueur d'une estimation de la réponse impulsionnelle d'un canal, exprimée en nombre de symboles des signaux, les blocs $B^k$ ayant chacun une structure de type Toeplitz le long de la diagonale principale.

**11.** Procédé selon la revendication 9, dans lequel les signaux sont transmis par radio avec étalement de spectre au moyen de séquences d'étalement respectives modulant les symboles et ayant une cadence Q fois supérieure à celle des symboles, et dans lequel le nombre L de lignes de la matrice A et des blocs $B^k$ est égal à nQ+W-1, où W est la longueur d'une estimation de la réponse impulsionnelle d'un canal, exprimée en nombre d'échantillons des séquences d'étalement, les blocs $B^k$ ayant chacun une structure de type Toeplitz le long d'une diagonale de pente Q.

**12.** Procédé selon l'une quelconque des revendications 9 à 11, dans lequel lé calcul de chaque vecteur $\hat{D}_i$ ou de chaque vecteur d'estimations $\hat{E}_i^{(m)}$ est effectué selon un algorithme à maximum de vraisemblance, tel que l'algorithme de Viterbi.

**13.** Procédé selon l'une quelconque des revendications 1 à 12, dans lequel la matrice triangulaire supérieure T est déterminée par factorisation de Cholesky de la matrice hermitienne définie positive $A^HA$, la matrice $A^HA$ étant proportionnelle à $T^HT$, et dans lequel le vecteur Z est proportionnel à

$$\left(T^H\right)^{-1} A^H Y \; .$$

**14.** Procédé selon l'une quelconque des revendications 1 à 12, dans lequel la matrice triangulaire supérieure T est déterminée par triangularisation de la matrice A selon la méthode de Householder fournissant une matrice unitaire U de L lignes et L colonnes telle que le produit UA soit une matrice de L lignes et N colonnes formée par un premier bloc de N lignes et N colonnes de structure triangulaire et par une second bloc de L-N lignes de zéros, la matrice T étant prise proportionnelle audit premier bloc, et dans lequel le vecteur Z est pris proportionnel à un bloc de taille N extrait du vecteur UY.

**15.** Récepteur de radiocommunication, comprenant des moyens de conversion (1,3,4) pour produire des vecteurs successifs Y de L échantillons numériques à partir d'un signal radio reçu, des moyens (6) de mesure de la réponse d'au moins un canal de transmission permettant de déterminer, pour chacun desdits vecteurs Y, une matrice A de L lignes et N colonnes telle que le vecteur Y puisse être décomposé en $Y=AD+Y_N$, où D est un vecteur de taille N formé de symboles discrets $(d_p^k)$ d'au moins un signal transmis, et $Y_N$ représente un vecteur de L échantillons de bruit, et des moyens d'égalisation (7) pour estimer, à partir de chaque vecteur Y, les symboles discrets d'au moins un signal transmis faisant partie des composantes du vecteur D correspondant, **caractérisé en ce que** les moyens d'égalisation sont agencés pour mettre en oeuvre toutes les étapes du procédé d'égalisation numérique selon l'une quelconque des revendications 1 à 14.

**Patentansprüche**

**1.** Verfahren zum numerischen Ausgleich, um ausgehend von einem Vektor Y von L numerischen Proben eines erhaltenen Signals diskrete Symbole $(d_p^k)$ von wenigstens einem übertragenen Signal abzuschätzen, bildend einen Teil der Komponenten eines Vektors D der Größe N, wobei der Vektor Y zu $Y = AD + Y_N$ zerlegt werden kann, worin A eine Matrix mit L Zeilen und N Spalten ist, welche vorab bestimmt worden ist (10) ausgehend von Messungen der Antwort von wenigstens einem Informationskanal, und $Y_N$ für einen Vektor von L Proben von Rauschen steht, **dadurch gekennzeichnet, dass** es die folgenden Schritte umfasst:

- Bestimmen (11) einer dreieckigen oberen Matrix T mit N Zeilen und N Spalten und eines Vektors Z (12) der Größe N derart, dass die quadratischen Kriterien $\|TX-Z\|^2$ und $\|AX-Y\|^2$ für denselben Vektor X der Größe N minimal sind;
- Aufteilen (12) des Vektor Z in J Blöcke $Z_i$ (1 $\leq i \leq J$) und der Matrix T in J(J+1)/2 Blöcke $T_{i,j}$ ($1\leq j\leq i\leq j$), wobei eine ganze Zahl größer als 1 ist, wobei der Block $Z_i$ aus $N_i$ Komponenten des Vektors Z gebildet wird, mit

$$\sum_{i=1}^{J} N_i = N,$$

und wobei der Block $T_{i,j}$ aus $N_i$ Zeilen und $N_j$ Spalten gebildet wird, in der Form:

$$Z = \begin{pmatrix} z_J \\ \hline \vdots \\ \vdots \\ \hline z_2 \\ \hline z_1 \end{pmatrix}, \quad \text{und} \quad T = \begin{pmatrix} T_{J,J} & \cdots & \cdots & T_{J,2} & T_{J,1} \\ 0 & \ddots & & \vdots & \vdots \\ \vdots & & \ddots & \vdots & \vdots \\ 0 & & \ddots & T_{2,2} & T_{2,1} \\ 0 & \cdots & \cdots & 0 & T_{1,1} \end{pmatrix},$$

- Abschätzen (15) von $N_1$ der diskreten Symbole als Komponenten eines Vektors $\hat{D}_1$ gleich jenem der Vektoren $X_1$, gebildet aus $N_1$ Komponenten unter Heranziehung der verschiedenen möglichen Werte der diskreten Symbole, was die Menge $\|T_{1,1}X_1 - Z_1\|^2$ minimiert.

2. Verfahren nach Anspruch 1, umfassend außerdem den folgenden Schritt, welcher nacheinander ausgeführt wird für jeden der Werte von i, mit i=2 bis i=imax, wobei die ganze Zahl imax derart ist, dass $2 \leq imax \leq J$:

- Abschätzen von $N_i$ der diskreten Symbole als Komponenten eines Vektors $\hat{D}_i$ gleich jenem der Vektoren $X_i$, gebildet aus $N_i$ Komponenten unter Heranziehung der verschiedenen möglichen Werte der diskreten Symbole, was die Menge

$$\left\| T_{i,i}X_i + \sum_{j=1}^{i-1} T_{i,j}\hat{D}_j - z_i \right\|^2$$

minimiert.

3. Verfahren zum numerischen Ausgleich, um ausgehend von einem Vektor Y von L numerischen Proben eines erhaltenen Signals die diskreten Symbole $(d^k)$ von wenigstens einem übertragenen Signal abzuschätzen, bildend einen Teil der Komponenten eines Vektors $\hat{D}$ der Größe N, wobei der Vektor Y zu $Y = AD + Y_N$ zerlegt werden kann, worin A eine Matrix mit L Zeilen und N Spalten ist, welche vorab bestimmt worden ist (20) ausgehend von Messungen der Antwort von wenigstens einem Informationskanal, und $Y_N$ für einen Vektor von L Proben von Rauschen steht, **dadurch gekennzeichnet, dass** es die folgenden Schritte umfasst:

- Bestimmen (21) einer dreieckigen oberen Matrix T mit N Zeilen und N Spalten und eines Vektors Z der Größe N derart, dass die quadratischen Kriterien $\|TX-Z\|^2$ und $\|AX-Y\|^2$ für denselben Vektor X der Größe N minimal sind; und
- Aufteilen (22) des Vektors Z in J Blöcke $Z_i$ ($1 \leq i \leq J$) und der Matrix T in $J(J+1)/2$ Blöcke $T_{i,j}$ ($1 \leq j \leq i \leq J$), wobei J eine ganze Zahl größer als 1 ist, wobei der Block $Z_i$ aus $N_i$ Komponenten des Vektors Z gebildet wird, mit

$$\sum_{i=1}^{J} N_i = N,$$

und wobei der Block $T_{i,j}$ aus $N_i$ Zeilen und $N_j$ Spalten gebildet wird, in der Form:

$$Z = \begin{pmatrix} Z_J \\ \vdots \\ \vdots \\ \hline Z_2 \\ \hline Z_1 \end{pmatrix}, \quad T = \begin{pmatrix} T_{J,J} & \cdots & \cdots & T_{J,2} & T_{J,1} \\ 0 & \ddots & & \vdots & \vdots \\ \vdots & \ddots & \ddots & \vdots & \vdots \\ 0 & & \ddots & T_{2,2} & T_{2,1} \\ 0 & \cdots & \cdots & 0 & T_{1,1} \end{pmatrix} \quad \text{und}$$

und den folgenden Schritt, welcher nacheinander ausgeführt wird für jeden der Werte von i mit i=1 bis i=imax, wobei die ganze Zahl imax derart ist, dass $1 \leq imax \leq J$:

- Bestimmen (26) einer Anzahl $M_i \geq 1$ von Abschätzungsvektoren $\hat{E}_i^{(m)}$ ($1 \leq m \leq M_1$) welche aus

$$P_i = \sum_{j=1}^{i} N_j$$

Komponenten gebildet werden, deren Werte aus den verschiedenen möglichen Werten der diskreten Symbole der Form

$$\hat{E}_i^{(m)} = \begin{pmatrix} X_i^{(m)} \\ \hline \hat{E}_{i-1}^{(m')} \end{pmatrix}$$

stemmen, worin $\hat{E}^{(m')}$ ein Abschätzungsvektor der Größe $P_{i-1}$, bestimmt in dem vorangegangenen Schritt, wenn i>1 ($1 \leq m' \leq M_{i-1}^{i-1}$) und $X_1^{(m}$ ein Vektor der Größe $N_i$ ist, wobei diese $M_i$ Abschätzungvektoren $\hat{E}_1^{(m')}$ die Menge

$$\delta_i^{(m)'} = \delta_{i-1}^{(m')} + \left\| T_{i,i} X_i^{(m)} - \tilde{z}_i^{(m')} \right\|^2$$

minimieren, mit $\delta_0^{(m')} = 0, \tilde{z}_1^{(m')} = Z_1$ und

$$\tilde{z}_i^{(m')} = Z_i - \left( T_{i,i-1} \mid \cdots \mid T_{i,2} \mid T_{i,1} \right) \hat{E}_{i-1}^{(m')}$$

für i>1, und dadurch, dass die Zahl $M_{imax}$ gleich 1 ist, $P_{imax}$ der diskreten Symbole durch die Komponenten des Abschätzungsvektors $\hat{E}_{imax}^{(l)}$ abgeschätzt werden.

**4.** Verfahren nach Anspruch 2 oder 3, in welchem imax=J.

**5.** Verfahren nach einem der Ansprüche 1 bis 4, bei welchem man die Matrix A und den Vektor D derart organisiert, dass die Matrix A eine Struktur des Toeplitz-Typs mit Blöcken aufweist mit einem gleichen Block B mit L' Zeilen und K Spalten, welcher n-mal wiederholt wird, wobei K die Anzahl von übertragenen Signalen ist und n die Anzahl von diskreten Symbolen eines Rasters von jedem der K Signale ist, wobei der Vektor D in Blöcke entsprechend $D_i$ der Größe K aufgeteilt ist:

$$A = \begin{pmatrix} B & & 0 & \cdots & & 0 \\ 0 & \ddots & & & \vdots \\ & \ddots & & 0 \\ \vdots & & B & \\ 0 & & 0 & & B \end{pmatrix} \quad und \quad D = \begin{pmatrix} D_n \\ \vdots \\ D_2 \\ D_1 \end{pmatrix}$$

und bei welchem man die Werte J=n und $N_1=\_=N_j=K$ für die Teilung des Vektors Z und der Matrix T einsetzt.

6. Verfahren nach Anspruch 5, bei welchem die Anzahl L' von Zeilen des Blocks B der Länge W einer Abschätzung der impulsantwort des Kanals, ausgedrückt als Anzahl von Symbolen der Signale, entspricht, wobei die wiederholten Blöcke B um jeweils eine Zeile versetzt angeordnet sind.

7. Verfahren nach Anspruch 5, bei welchem die Signale durch Radiowellen übertragen werden mit einer Spreizung des Spektrums mittels jeweiligen Spreizsequenzen ($c^k$), welche die Symbole $(d^k_p)$ modulieren und einen Takt aufweisen, welcher Q-mal höher ist als jener der Symbole, und bei welchem die Anzahl L' der Zeilen des Blocks B gleich Q+W-1 ist, worin W die Länge einer Abschätzung der Impulsantwort eines Kanals ist, ausgedrückt als Anzahl von Proben der Spreizsequenzen, wobei die wiederholten Blöcke B um jeweils Q Zeilen versetzt angeordnet sind.

8. Verfahren nach einem der Ansprüche 5 bis 7, bei welchem die diagonalen Blöcke $T_{i,j}$ der Matrix T (1≤i≤j) identisch sind und derart, dass $T_{i,i}^H T_{i,i}$ proportional zu $B^H B$ ist, und bei welchem man vorab die Vektoren $T_{i,i}X_i$ berechnet, worin $X_i$ ein Vektor der Größe K, dessen Komponenten die verschiedenen möglichen Werte der diskreten Symbole $(d^k_p)$ einnehmen, ist.

9. Verfahren nach einem der Ansprüche 1 bis 4, bei welchem man die Matrix A und den Vektor D derart organisiert, dass die Matrix A aus der Nebeneinanderanordnung von K Blöcken $B^k$ mit L Zeilen und n Spalten gebildet wird, wobei jeder Block $B^k$ eine Struktur vom Toeplitz-Typ mit Nullen oberhalb von dessen Hauptdiagonale aufweist, wobei K die Anzahl von übertragenen Signalen ist und n eine Anzahl von diskreten Symbolen eines Rasters von jedem der K Signale ist, wobei der Vektor D aufgeteilt ist in Blöcke entsprechend $D^k$ der Größe n:

$$A = \begin{pmatrix} B^K & \vdots & \cdots & \vdots & B^2 & \vdots & B^1 \end{pmatrix} \quad und \quad D = \begin{pmatrix} D^K \\ \vdots \\ D^2 \\ D^1 \end{pmatrix},$$

und bei welchem man die Werte J=K und $N_1=\_=N_J=n$ für die Teilung des Vektors Z und der Matrix T einsetzt.

10. Verfahren nach Anspruch 9, bei welchem die Anzahl L der Zeilen der Matrix A und der Blöcke $B^k$ gleich n+W-1 ist, worin W die Länge einer Abschätzung der Impulsantwort eines Kanals ist, ausgedrückt als Anzahl von Symbolen der Signale, wobei die Blöcke $B^k$ jeweils eine Struktur vom Toeplitz-Typ entlang der Nauptdiagonale aufweisen.

**11.** Verfahren nach Anspruch 9, bei welchem die Signale durch Radiowellen übertragen werden mit einer Spreizung des Spektrums mittels jeweiligen Spreizsequenzen, welche die Symbole modulieren und einen Takt aufweisen, welcher Q-mal höher ist als jener der Symbole, und bei welchem die Anzahl L der Zeilen der Matrix A und der Blöcke $B^k$ gleich nQ+W-1 ist, worin W die Länge einer Abschätzung der Impulsantwort eines Kanals ist, ausgedrückt als Anzahl von Proben der Spreizsequenzen, wobei die Blöcke $B^k$ jeweils eine Struktur vom Toeplitz-Typ entlang einer Diagonale mit der Neigung Q aufweisen.

**12.** Verfahren nach einem der Ansprüche 9 bis 11, bei welchem die Berechnung von jedem Vektor $\hat{D}_i$ oder von jedem Abschätzungsvektor $\hat{E}_i^{(m)}$ gemäß einem Algorithmus mit maximaler Wahrscheinlichkeit, wie dem Viterbi-Algorithmus, ausgeführt wird.

**13.** Verfahren nach einem der Ansprüche 1 bis 12, bei welchem die obere dreieckige Matrix T bestimmt wird durch Cholesky-Faktorisierung der positiv definierten hermitischen Matrix $A^H A$, wobei die Matrix $A^H A$ proportional zu $T^H T$ ist, und bei welchem der Vektor Z proportional zu

$$\left( T^H \right)^{-1} A^H Y$$

ist.

**14.** Verfahren nach einem der Ansprüche 1 bis 12, bei welchem die obere dreieckige Matrix T bestimmt wird durch Triangulation der Matrix A gemäß der Householder-Methode, was eine unitäre Matrix U mit L Zeilen und L Spalten liefert derart, dass das Produkt UA eine Matrix mit L Zeilen und N Spalten ist, welche durch einen ersten Block mit N Zeilen und N Spalten von dreieckiger Struktur und durch einen zweiten Block mit L-N Zeilen von Nullen gebildet wird, wobei die Matrix T proportional zu dem ersten Block angenommen wird, und bei welchem der Vektor Z proportional zu einem Block der Größe N, welcher aus dem Vektor UY extrahiert wird, angenommen wird.

**15.** Funkverkehrempfänger, umfassend Umwandlungsmittel (1,3,4) zur Erzeugung von aufeinanderfolgenden Vektoren Y von L numerischen Proben ausgehend von einem empfangenen Rundfunksignal, Mittel (6) zum Messen der Antwort von wenigstens einem Informationskanal, welche erlauben, für jeden der Vektoren Y eine Matrix A mit L Zeilen und N Spalten zu bestimmen derart, dass der Vektor Y zu $Y=AD+Y_N$ zerlegt werden kann, worin D ein Vektor der Größe N ist, welcher aus diskreten Symbolen $(d_p^k)$ von wenigstens einem übertragenen Signal gebildet wird, und $Y_N$ für einen Vektor von L Proben von Rauschen steht, und Ausgleichmittel (7), um ausgehend von jedem Vektor Y die diskreten Symbole von wenigstens einem übertragenen Signal abzuschätzen, bildend einen Teil der Komponenten des entsprechenden Vektors D, **dadurch gekennzeichnet, dass** die Ausgleichmittel ausgelegt sind, um alle Schritte des Verfahrens zum numerischen Ausgleich gemäß einem der Ansprüche 1 bis 14 auszuführen.

**Claims**

**1.** A digital equalisation method for estimating, from a vector Y of L digital samples of a received signal, the discrete symbols $(d_p^k)$ of at least one transmitted signal forming part of the components of a vector D of a size N, wherein the vector Y may be decomposed as $Y=AD+Y_N$, where A is a matrix of L rows and N columns, determined beforehand (10) from measurements of the response of at least one transmission channel, and $Y_N$ represents a vector of L noise samples, **characterised in that** it comprises the steps of:

- determining (11) an upper triangular matrix T of N rows and N columns and (12) a vector Z of a size N such that the quadratic criteria $\|TX-Z\|^2$ and $\|AX-Y\|^2$ are minimum for the same vector X of size N;
- dividing (12) the vector Z into J blocks $Z_i$ ($1 \le i \le J$) and the matrix T into J(J+1)/2 blocks $T_{i,j}$ ($1 \le j \le i \le J$), J being an integer greater than 1, the block $Z_i$ being made up of $N_i$ components of the vector Z, where

$$\sum_{i=1}^{J} N_i = N,$$

and the block $T_{i,j}$ being made up of $N_i$ rows and $N_j$ columns, in the form :

$$Z = \begin{pmatrix} Z_J \\ \vdots \\ \vdots \\ Z_2 \\ Z_1 \end{pmatrix} \quad \text{and} \quad T = \begin{pmatrix} T_{J,J} & \cdots & \cdots & T_{J,2} & T_{J,1} \\ 0 & \ddots & & \vdots & \vdots \\ \vdots & \ddots & \ddots & \vdots & \vdots \\ 0 & & \ddots & T_{2,2} & T_{2,1} \\ 0 & \cdots & \cdots & 0 & T_{1,1} \end{pmatrix} ;$$

- estimating (15) $N_1$ of the discrete symbols as being the components of a vector $\hat{D}_1$ equal to that of the vectors $X_1$, made up of $N_1$ components taking the different possible values of the discrete symbols, which minimises the quantity $\|T_{1,1}X_1 - Z_1\|^2$.

2. A method as claimed in claim 1, further comprising the following step, performed successively for each of the values of i from i=2 to i=imax, the integer imax being such that $2 \leq imax \leq J$:

- estimating $N_i$ of the discrete symbols, as being the components of a vector $\hat{D}_i$ equal to that of the vectors $X_i$, made up of $N_i$ components taking the different possible values of the discrete symbols, which minimises the quantity

$$\left\| T_{i,i}X_i + \sum_{j=1}^{i-1} T_{i,j}\hat{D}_j - Z_i \right\|^2 .$$

3. A digital equalisation method for estimating, from a vector Y of L digital samples of a received signal, the discrete symbols ($d^k$) of at least one transmitted signal forming part of the components of a vector D of a size N, wherein the vector Y may be decomposed as $Y = AD + Y_N$, where A is a matrix of L rows and N columns, determined beforehand (20) from measurements of the response of at least one transmission channel, and $Y_N$ represents a vector of L noise samples, **characterised in that** it comprises the steps of:

- determining (21) an upper triangular matrix T of N rows and N columns and a vector Z of a size N such that the quadratic criteria $\|TX - Z\|^2$ and $\|AX - Y\|^2$ are minimum for the same vector X of size N;
- dividing (22) the vector Z into J blocks $Z_i$ ($1 \leq i \leq J$) and the matrix T into $J(J+1)/2$ blocks $T_{i,j}$ ($1 \leq j \leq i \leq J$), J being an integer greater than 1, the block $Z_1$ being made up of $N_i$ components of the vector Z, where

$$\sum_{i=1}^{J} N_i = N,$$

and the block $T_{i,j}$ being made up of $N_i$ rows and $N_j$ columns, in the form :

$$Z = \begin{pmatrix} Z_J \\ - - - \\ \vdots \\ \vdots \\ - - - \\ Z_2 \\ - - - \\ Z_1 \end{pmatrix} \quad \text{and} \quad T = \begin{pmatrix} T_{J,J} & \cdots & \cdots & T_{J,2} & T_{J,1} \\ 0 & \ddots & & \vdots & \vdots \\ \vdots & \ddots & \ddots & \vdots & \vdots \\ 0 & & \ddots & T_{2,2} & T_{2,1} \\ 0 & \cdots & \cdots & 0 & T_{1,1} \end{pmatrix} \ ;$$

and the following step, performed successively for each of the values of i from i=1 to i=imax, the integer imax being such that $2 \leq \text{imax} \leq J$:

- determining (26) a number $M_i \geq 1$ of estimation vectors $\hat{E}_i^{(m)}$, $(1 \leq m \leq M_i)$, made up of

$$P_i = \sum_{j=1}^{i} N_j$$

components whose values are among the different possible values of the discrete symbols, in the form

$$\hat{E}_i^{(m)} = \begin{pmatrix} X_i^{(m)} \\ \hat{E}_{i-1}^{(m')} \end{pmatrix},$$

where $\hat{E}_{i-1}^{(m')}$ is an estimation vector of size $P_{i-1}$ determined at the preceding step if i>1 $(1 \leq m \leq M_{j-1})$ and $X_i^{(m)}$ is a vector of size $N_i$, whereby said $M_i$ estimation vectors $\hat{E}_i^{(m)}$ minimise the quantity

$$\delta_i^{(m)} = \delta_{i-1}^{(m')} + \left\| T_{i,i} X_i^{(m)} - \tilde{Z}_i^{(m')} \right\|^2 ,$$

where $\delta_0^{(m')} = 0, \tilde{Z}_1^{(m')} = Z_1$, and

$$\tilde{Z}_i^{(m')} = Z_i - \left( T_{i,i-1} \vdots \cdots \vdots T_{i,2} \vdots T_{i,1} \right) \hat{E}_{i-1}^{(m')}$$

for i>1,

and **in that**, the number $M_{\text{imax}}$ being equal to 1, $P_{\text{imax}}$ discrete symbols are estimated by the components of the estimation vector $\hat{E}_{\text{imax}}^{(1)}$.

**4.** A method as claimed in claim 2 or 3, wherein imax=J.

**5.** A method as claimed in any one of claims 1 to 4, wherein the matrix A and vector D are organised so that the matrix A has a blockwise Toeplitz structure with a same block B of L' rows and K columns repeated n times, K being the number of signals transmitted and n being a number of discrete signals of a frame of each of the K signals, the vector D being divided into corresponding blocks $D_i$ of a size K:

$$A = \begin{pmatrix} B & 0 & \cdots & 0 \\ 0 & \ddots & & \vdots \\ & \ddots & \ddots & 0 \\ \vdots & & B & \\ 0 & \ddots & 0 & B \end{pmatrix}, \text{ and } D = \begin{pmatrix} D_n \\ \vdots \\ D_2 \\ D_1 \end{pmatrix}$$

and wherein the values J=n and $N_1=...=N_J=K$ are used for dividing the vector Z and the matrix T.

6.  A method as claimed in claim 5, wherein the number L' of rows in block B corresponds to the length W of an estimation of the channel impulse response, expressed as a number of symbols of the signals, the repeated blocks B being offset by one row.

7.  A method as claimed in claim 5, wherein the signals are transmitted by spread spectrum radio by means of respective spreading sequences ($c^k$) modulating the symbols ($d^k_p$) and having a rate Q times greater than that of the symbols, and wherein the number L' of rows in block B is equal to Q+W-1, where W is the length of an estimation of the impulse response of a channel, expressed as a number of samples of the spreading sequences, the repeated blocks B being offset by Q rows.

8.  A method as claimed in any one of claims 5 to 7, wherein the diagonal blocks $T_{i,i}$ of the matrix ($1 \leq i \leq J$) are identical and such that $T_{i,i}{}^H T_{i,i}$ is proportional to $B^H B$, and wherein the vectors $T_{i,j}X_i$ are calculated in advance, $X_i$ being a vector of size K whose components assume the different possible values of the discrete symbols ($d^k_p$).

9.  A method as claimed in any one of claims 1 to 4, wherein the matrix A and vector D are organised so that the matrix A is made of a juxtaposition of K blocks $B^k$ of L rows and n columns, each block $B^k$ having a Toeplitz structure, with zeros above its main diagonal, K being the number of signals transmitted and n being a number of discrete symbols in a frame of each of the K signals, the vector D being divided into corresponding blocks $D^k$ of size n :

$$A = \left( B^K \mid \cdots \mid B^2 \mid B^1 \right), \text{ and } D = \begin{pmatrix} D^K \\ \vdots \\ D^2 \\ D^1 \end{pmatrix}$$

and wherein the values J=K and $N_1=...=N_J=N$ are used to divide the vector Z and the matrix T.

10. A method as claimed in claim 9, wherein the number L of rows in the matrix A and the blocks $B^k$ is equal to n+W-1, where W is the length of an estimation of the impulse response of a channel, expressed as a number of symbols of the signals, each of the blocks $B_k$ having a Toeplitz structure along the main diagonal.

11. A method as claimed in claim 9, wherein the signals are transmitted by spread spectrum radio by means of respective spreading sequences modulating the symbols and having a rate Q times greater than that of the symbols and wherein the number L of rows in the matrix A and blocks $B^k$ is equal to nQ+W-1, where W is the length of an estimation of the impulse response of a channel, expressed as a number of samples of the spreading sequences, each of the blocks $B^k$ having a Toeplitz structure along a diagonal of slope Q.

12. A method as claimed in any one of claims 9 to 11, wherein each vector $\hat{D}_i$ or each estimation vector $\hat{E}_i^{(m)}$ is computed

by means of a maximum likelihood algorithm such as the Viterbi algorithm.

13. A method as claimed in any one of claims 1 to 12, wherein the upper triangular matrix T is determined by a Cholesky factorisation of the positive defined Hermitian matrix $A^H A$, the matrix $A^H A$ being proportional to $T^H T$, and wherein the vector Z is proportional to $(T^H)^{-1} A^H Y$.

14. A method as claimed in any one of claims 1 to 12, wherein the upper triangular matrix T is determined by triangularizing the matrix A using the Householder method providing a unitary matrix U of L rows and L columns such that the product UA is a matrix of L rows and N columns made up of a first block of N rows and N columns having a triangular structure and a second block of L-N rows of zeros, the matrix T being taken as being proportional to said first block, and wherein the vector Z is taken as being proportional to a block of size N extracted from the vector UY.

15. A radio communication receiver comprising conversion means (1, 3, 4) for producing successive vectors Y of L digital samples from a received radio signal, means (6) for measuring the response of at least one transmission channel, so as to determine, for each of said vectors Y, a matrix A of L rows and N columns such that the vector Y can be decomposed as $Y = AD + Y_N$, where D is a vector of size N made up of discrete symbols $(d_p^k)$ of at least one signal transmitted and $Y_N$ represents a vector of L noise samples, and equalisation means (7) for estimating, on the basis of each vector Y, the discrete symbols of at least one transmitted signal forming part of the components of the corresponding vector D, **characterised in that** the equalisation means are set up so as to implement all the steps of the digital equalisation method as claimed in any one of claims 1 to 14.

2 — ÉTAGE RADIO — CAN — FILTRE RÉCEPTION — 6 SYNCHRONISATION ESTIMATION DE CANAL

1   3   4

$\{b_j^k\}$

$y_p$ → ÉGALISEUR

7

$\{\hat{d}_p^k\}$

DÉSENTRELACEMENT

8

9 — DÉCODEUR CANAL

$\{\hat{a}_p^k\}$

**FIG.1.**

**FIG.4.**

BER (%)

10

1

0,1

0   4   8   12   16   20   24   Eb/NO (dB)

II

I

**FIG.5.**

BER (%)

10

1

0,1

0,01

0,001

0,0001

0   4   8   12   16   20   Eb/NO (dB)

II

I

FIG. 2.

20 — FORMATION BLOC B ET MATRICE $A = \begin{pmatrix} B & & \\ & B & \\ & & \ddots & \\ & & & B \end{pmatrix}$

21 — CALCUL MATRICE T DIVISION EN BLOCS $T_{i,j}$

22 — CALCUL VECTEUR Z DIVISION EN BLOCS $Z_i$

FIG.3

23 — PRECALCUL DES $T_{i,i} X_i$

24 — $i = 1$

25 — $\tilde{Z}_i^{(m')} = Z_i - (T_{i,i-1} | \cdots | T_{i,1}) \hat{E}_{i-1}^{(m')}$
$(1 \leq m' \leq M_{i-1})$

26 — $\hat{E}_i^{(m)} = \begin{pmatrix} X_i^{(m)} \\ \hat{E}_{i-1}^{(m')} \end{pmatrix} (1 \leq m \leq M_i)$ MINIMISENT
$\delta_i^{(m)} = \delta_i^{(m')} + \left\| T_{i,i} X_i^{(m)} - \tilde{Z}_i^{(m')} \right\|^2$

30 — $i = i + 1$

27 — MEMORISER LES $\hat{E}_i^{(m)}$

29 — MEMORISER LES $\delta_i^{(m)}$

28 — $i = i_{max}$ ?

OUI

NON

DELIVRER LES $\hat{d}_p^k$